# FASCICULE DE BREVET EUROPEEN

(11) **EP 2 911 083 B1**
(45) Date de publication et mention de la délivrance du brevet: **28.09.2016**
(21) Numéro de dépôt: 14156392.4
(22) Date de dépôt: 24.02.2014
(51) Int. Cl.: G06F 21/62, H04L 29/06

(54) **Méthode d'accès aux données d'au moins une personne physique ou morale ou d'un objet**
Verfahren zum Zugriff auf Daten einer physischen oder einer moralischen Person oder eines Objekts
Method to access data of at least a pyhiscal or moral person or of an object

(43) Date de publication de la demande: 26.08.2015
(73) Titulaire: Nagravision S.A., 1033 Cheseaux-sur-Lausanne (CH)
(72) Inventeur: Bocchetti, Salvatore, 1004 Lausanne (CH)
(74) Mandataire: Leman Consulting S.A.

(56) Documents cités:
- WO-A1-2008/122627

## Description

### Introduction

La présente demande se réfère au domaine de la protection des données privées, en particulier les données stockées dans des bases de données utilisées à des fins d'authentification.

Il peut être intéressant que des données soient accessibles afin de permettre à des tiers autorisés d'obtenir des informations fiables afin d'accéder à des services. Ceci peut être le cas pour l'obtention d'un crédit, procédure durant laquelle les capacités financières de requérant doivent être vérifiées. D'autres applications peuvent concerner l'âge de la personne, ses compétences. Il peut aussi s'agir des caractéristiques d'un objet tel que performance, taille, capacité.

Le problème que de telles vérifications soulèvent est que l'accès à ces données est ouvert à l'entité requérante lors de la procédure de vérification.

Il est dès lors souhaitable que ces données de base, propre à une personne ou un objet, soient utilisées sans être divulguées, par exemple pour assurer la conformité de la personne ou de l'objet à des conditions définies par une entité requérante.

De plus, la conformité à une requête ou aux conditions requises par l'entité requérante doit pouvoir être validée par une autorité de sorte que la réponse délivrée par l'entité répondante puisse être fiable sans devoir divulguer les données brutes.

### Etat de la technique

Le document WO2008/122627 décrit une solution de vérification centrée sur un utilisateur. La carte SIM stocke des informations personnelles et un tiers tel qu'un distributeur de cigarettes peut interroger la carte SIM via le téléphone portable d'un utilisateur. L'automate peut former une requête, la certifier et la transmettre au téléphone portable. Ce dernier, via la carte sécurisée SIM peut exécuter la requête (vérifier si l'âge de l'acheteur est adéquat) et renvoyer une réponse.

### Brève description de l'invention

La présente invention vise à proposer une méthode et un système permettant de fournir des informations fiables, certifiées, sans que la source des informations soient transmises au requérant.

La présente invention propose une méthode d'accès aux données d'au moins une personne physique ou morale ou d'un objet, stockées dans une base de données sécurisée sur un support amovible, ces données comprenant des données quantitatives ou qualitatives, chaque donnée comprenant au moins un descripteur et une valeur, cette méthode comprenant des étapes d'initialisation et d'exploitation, l'initialisation comprenant les étapes suivantes :
- connecter le support amovible à un dispositif de saisie d'informations,
- s'authentifier auprès de la base de données en démontrant le droit à au moins une introduction,
- introduire dans la base de données sécurisée, pour une personne morale ou physique ou un objet, une valeur courante correspondant au descripteur de ladite donnée;
l'exploitation comprenant les étapes suivantes :
- connecter le support amovible à un dispositif de communication,
- recevoir une requête d'une entité participante, cette requête comprenant au moins un descripteur cible et un opérateur,
- exécuter, par l'entité répondante, la requête en appliquant l'opérateur sur la valeur courante correspondant au descripteur cible et produire une réponse,
- renvoyer la réponse à l'entité participante, **caractérisée en ce que la base de données comprend de plus au moins un compteur de requêtes associé à une ou des données, et qu'elle comprend les étapes de :**
- **comparer la valeur du compteur avec une valeur maximale, l'exécution de la requête et le** renvoi **de la réponse** n' **étant exécutées que si la valeur est inférieure à la valeur maximale.**

Ainsi la présente invention se base sur un support amovible tel qu'une carte à puce, un téléphone portable ou tout élément électronique disposant de capacité mémoire, stockant les données d'une personne physique ou morale ou d'un objet. Par personne physique on entend un individu ou un groupe d'individus tels qu'une famille. Une personne morale peut être une entreprise, une association, une organisation. Un objet dispose aussi de caractéristiques qui peuvent être utilisées pour authentification.

La présente invention propose une méthode d'accès limité aux données d'une pluralité de personnes physiques ou morales ou d'objets, stockées dans une base de données sécurisée d'une entité répondante, ces données comprenant des données quantitatives ou qualitatives, chaque donnée comprenant au moins un descripteur et une valeur, cette méthode comprenant des étapes d'initialisation et d'exploitation, l'initialisation comprenant les étapes suivantes :
- s'authentifier auprès de la base de données en démontrant le droit à au moins une introduction,
- identifier au moins une personne ou un objet,
- introduire dans la base de données sécurisée, pour ladite personne ou objet, une valeur courante correspondant au descripteur de ladite donnée,
l'exploitation comprenant les étapes suivantes :
- recevoir une requête d'une entité participante, cette requête comprenant un identifiant de personne ou d'objet, un descripteur cible, un opérateur,
- exécuter, par l'entité répondante, la requête en appliquant l'opérateur sur la valeur courante correspondant au descripteur cible et produire une réponse,
- renvoyer la réponse à l'entité participante, **caractérisée en ce que la base de données comprend de plus au moins un compteur de requêtes associé à une ou des données, et qu'elle comprend les étapes de :**
   - **comparer la valeur du compteur avec une valeur maximale, l'exécution de la requête et le** renvoi **de la réponse** n' **étant exécutées que si la valeur est inférieure à la valeur maximale.**

Ainsi cette méthode comprend une première étape d'initialisation, comprenant l'introduction des données, et une seconde étape d'exploitation, comprenant la réception, le traitement et la réponse à des requêtes.

L'invention propose également un support amovible tel que décrit dans les revendications.

### Brève description des figures

La présente demande sera mieux comprise sur la base des figures en annexe dans lesquelles :

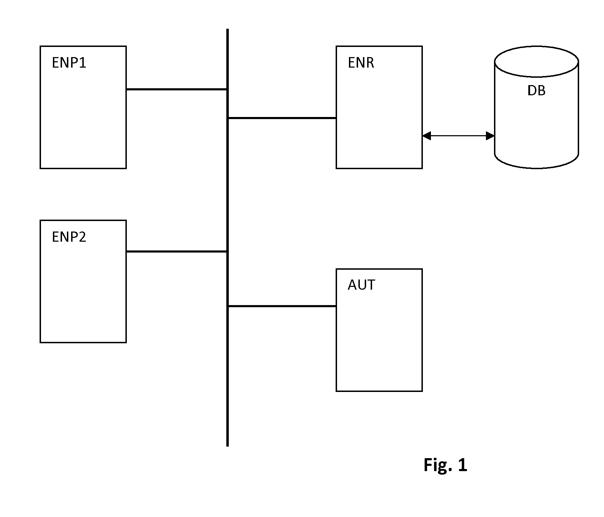

- la figure 1 illustre les différents éléments composants de l'invention.

### Description détaillée

La méthode s'articule autour d'une entité répondante ENP disposant d'une base de données DB pouvant stocker des données privées de personne physique ou morale ou d'un objet. Les données sont généralement organisées sous forme d'enregistrement, soit un ensemble de données relié par une définition commune.

Chaque enregistrement comporte au moins un descripteur (par exemple salaire, profession, âge, adresse etc) et une valeur correspondant audit descripteur. Optionnellement, un certificat est associé à un ou des enregistrements.

Un exemple de certificat est connu sous l'appellation X.509. Dans le système X.509, une autorité de certification attribue un certificat liant une clé publique à un nom distinctif (Distinguished Name), à une adresse électronique ou un enregistrement DNS.

Ce certificat place la signature d'une autorité de certification dans le dernier champ. Concrètement cette signature est réalisée par : Un condensat de tous les champs précédents du certificat, et un chiffrement de ce condensat par la clé privée de l'autorité de certification. N'importe qui possédant la clé publique de cette autorité de certification peut déchiffrer le condensat et le comparer au calcul de son propre condensat du certificat. Si les deux condensats sont identiques cela garantit que le certificat est intègre, il n'a pas été modifié. Le certificat de l'autorité de certification qui contient sa clé publique peut à son tour être signée par un autre certificat de plus haut niveau, formant ainsi une chaîne. Tout en haut de la chaîne on trouve les certificats les plus importants : les certificats racines. Les certificats racines sont des clés publiques non signées, ou auto-signées, dans lesquelles repose la confiance. Les logiciels, comme les navigateurs Web ou les clients de messagerie détiennent des certificats racines de nombreuses autorités de certification commerciales ou gouvernementales. Quand un navigateur ouvre une connexion sécurisée (TLS/SSL) vers un site possédant un certificat émis par une autorité connue, il considère le site comme sûr dans la mesure où le chemin de certification est validé. Le passage en mode sécurisé est alors transparent.

Lors d'une étape d'initialisation, une personne morale (une société, une organisation) ou une personne physique peut stocker des données privées dans la base de données de l'entité répondante. Dans le cas de données relative à un objet, les données peuvent être stockées de façon automatique (par exemple, valeurs capturés par une sonde). Le stockage peut aussi être de type temporaire, par exemple dans le cas ou des données sont capturées par une sonde reliée à une mémoire qui fait office de « base de donnée ». L'entité répondante peut être un support amovible comprenant une mémoire et des moyens de traitement des requêtes. Ceci peut être un téléphone portable par exemple, connecté temporairement à une entité requérante par liaison Bluetooth ou NFC.

La base de données peut comprendre deux types de descripteur, soit ceux prédéfinis et ceux définis par la personne.

Dans la première catégorie, se trouvent tous les enregistrements prédéfinis pour lesquels il suffira de remplir la valeur cible. Il s'agit des données courantes comme la date de naissance, l'adresse, la situation familiale ou le revenu.

Le descripteur de l'enregistrement est donc une simple valeur qui fait référence à une liste de définition (par exemple, la valeur 27 du descripteur signifie que la valeur cible est l'année de naissance).

Le descripteur peut être un champ éditable libre. Ainsi la personne peut définir des types de données non prévue par l'entité répondante ENR et y associer la valeur de son choix.

La base de données de l'entité répondante est sécurisée c'est-à-dire que l'introduction des données ne peut se faire sans autorisation. La base de données est protégée par une authentification forte comme l'utilisation d'un mot de passe à usage unique, l'utilisation d'un certificat électronique, ou l'utilisation de données biométriques.

Selon une procédure de certification, les données sont ensuite certifiées par une autorité AUT qui est illustrée comme une entité distincte sur la figure 1. Cette autorité peut être intégrée à l'entité répondante ou être une entité séparée.

La procédure de certification consiste à faire intervenir un tiers qui pourra confirmer l'information. Cette autorité AUT peut obtenir via d'autres sources des informations pour corroborer la valeur inscrite dans la base de données. En effet, des sociétés spécialisées disposent d'informations fiables sur les personnes ou les sociétés et peuvent certifier un ou des valeurs. Par exemple sur la demande de la personne, l'entité répondante ENR peut accéder à cette autorité AUT qui est sous forme d'un service spécialisé (par exemple une banque pour vérifier la limite de crédit). Préalablement, l'entité répondante peut demander à la personne des informations complémentaires tel de mot de passe ou information de vérification. Ces informations complémentaires seront ajoutées à la requête transmise à l'autorité afin de permettre à cette autorité de vérifier la légitimité de la requête. Cette autorité dispose d'un certificat pour signer la valeur transmise dans la requête. Dans la mesure ou la base de données est réalisé avec un élément sécurisé, qui ne permet pas l'extraction d'information au-delà de celle qui est censée faire partie de communication vers l'extérieur (ex. carte à puce,...), l'autorité AUT communiquera son certificat à l'élément sécurisé pour que ce dernier puisse l'utiliser pour signer la réponse fournie. Dans une autre réalisation, l'élément sécurisé utilisera pour la signature d'un autre certificat qui a été à son tour vérifié et signé par une autorité AUT-

Ainsi la base de données de l'entité répondante comprendra des enregistrements organisés avec un descripteur de données et une ou des valeurs ainsi qu'un ou des certificats associés à des autorités.

Dans un second temps, une entité requérante ENP1, ENP2 peut former une requête pour obtenir une vérification d'une information. Cette requête va comprendre un identifiant d'entité requérante, le descripteur de donnée (par exemple le revenu), un opérateur (par exemple < ou >) et accessoirement une valeur cible. La valeur cible peut être optionnelle, par exemple lors de la vérification de l'accès à un bar, il suffit que le descripteur soit "l'âge" et l'opérateur soit "majeur ?". Une requête peut comprendre plusieurs descripteurs (par exemple la ville de résidence et la rue) et/ou plusieurs valeurs cibles (par exemple une liste de supposés employeurs). Cette requête peut être également signée par l'entité requérante pour authentifier la requête.

A la réception de cette requête, l'entité répondante va pouvoir déterminer la personne pour qui s'adresse cette requête grâce à l'identifiant, et va retrouver la donnée concernée grâce au descripteur et retrouver la valeur correspondant à cette donnée.

L'entité répondante va ensuite appliquer l'opérateur sur la valeur et obtenir une réponse. Cette réponse sera principalement binaire soit positif ou négatif ou un refus de répondre. La réponse peut être également contenir une signature attachée à cette réponse. Cette réponse est envoyée à l'entité requérante. La réponse peut comprendre une copie de la question à savoir la valeur cible, l'opérateur, l'identifiant de la personne.

Selon une variante de l'invention, lorsqu'une requête en reçue par l'entité répondante, cette entité relaie la requête ou une partie à la personne correspondant à l'identifiant de personne. Cette requête est présentée à un dispositif d'affichage de la personne. Il est ainsi présenté un identifiant de l'entité requérante, et les détails de la requête. La personne peut accepter ou refuser qu'une réponse soit envoyée à l'entité requérante, mais elle ne peut pas modifier la réponse si l'envoi a été autorisé par la personne

Selon une variante de l'invention, le traitement de la requête diffère en fonction de l'entité requérante. L'entité répondante va déterminer la catégorie à laquelle appartient cette entité requérante, et selon cette catégorie certaines des données seront accessibles ou non. La base de données DB comprend une liste des entités requérantes possibles et leur catégorie. Une institution étatique sera par exemple de catégorie 4 (a haute valeur de confiance) alors qu'un simple magasin sera de catégorie 1 (niveau de confiance bas). De la même manière, les données de la personne physique ou morale peuvent être classées selon les catégories, permettant ainsi, lors d'une requête, de vérifier si la catégorie à laquelle appartient l'entité requérante autorise l'accès à cette donnée. Si le niveau attaché aux données est égal ou inférieur au niveau de l'entité requérante, la requête est traitée et la réponse envoyée. Dans la négative, une réponse refusant la requête est envoyée à l'entité requérante par l'entité répondante.

Une méthode connue pour extraire les données brutes d'une telle base de données est d'envoyer une multitude de requête en faisant varier la valeur cible. Ainsi par exemple si le revenu est visé, une requête demandant si le revenu est inférieur une première valeur cible est envoyée et tant que la réponse est positive, la valeur cible est incrémentée. Ainsi la valeur du revenu correspond au moment ou la réponse change. Grâce à cette méthode récurrente, il est possible de connaître toutes les valeurs de la base de données.

Ainsi selon l'invention, un compteur de requêtes est ajouté à l'entité répondante et permet de limiter le nombre de requêtes. Le compteur peut être associé à l'ensemble des données d'une personne, à une donnée d'une personne, ou à une entité requérante, ou à un ensemble des paramètres cités. Pour prendre le troisième exemple, à chaque requête d'une entité requérante particulière, le compteur est incrémenté. Un maximum est défini pour le compteur et lorsque ce maximum est atteint, l'entité répondante refuse les requêtes suivantes. Le compteur pourra être remis à zéro par un opérateur de l'entité répondante ou par la personne.

Le contrôle par le compteur peut être associé à un maximum par unité de temps, par exemple 3 requêtes par 24 heures. Une fois ce nombre atteint durant le temps prédéfini, les requêtes suivantes sont rejetées. Une fois la période expirée, le compteur est remis à zéro.

## Revendications

1. Méthode d'accès aux données personnelles d'au moins une personne physique ou morale ou d'un objet, stockées dans une base de données sécurisée sur un support amovible, ces données comprenant des données quantitatives ou qualitatives, chaque donnée comprenant au moins un descripteur et une valeur, cette méthode comprenant des étapes d'initialisation et d'exploitation, l'initialisation comprenant les étapes suivantes :
- connecter le support amovible à un dispositif de saisie d'informations,
- s'authentifier auprès de la base de données en démontrant le droit à au moins une introduction,
- introduire dans la base de données sécurisée, pour une personne morale ou physique ou un objet, une valeur courante correspondant au descripteur de ladite donnée;
l'exploitation comprenant les étapes suivantes :
- connecter le support amovible à un dispositif de communication,
- recevoir une requête d'une entité requérante, cette requête comprenant au moins un descripteur cible et un opérateur,
- exécuter, par l'entité répondante, la requête en appliquant l'opérateur sur la valeur courante correspondant au descripteur cible et produire une réponse,
- renvoyer la réponse à l'entité requérante, la **base de données** comprenant **de plus au moins un compteur de requêtes associé à une ou des données, et** la méthode comprenant **les étapes de :**
- **comparer la valeur du compteur avec une valeur maximale, l'exécution de la requête et le** renvoi **de la réponse n' étant exécutées que si la valeur est inférieure à la valeur maximale.**

2. Méthode d'accès limité aux données d'une pluralité de personnes physiques ou morales ou d'objets, stockées dans une base de données sécurisée d'une entité répondante, ces données comprenant des données quantitatives ou qualitatives, chaque donnée comprenant au moins un descripteur et une valeur, cette méthode comprenant des étapes d'initialisation et d'exploitation, l'initialisation comprenant les étapes suivantes :
- s'authentifier auprès de la base de données en démontrant le droit à au moins une introduction,
- identifier au moins une personne ou un objet,
- introduire dans la base de données sécurisée, pour ladite personne ou objet, une valeur courante correspondant au descripteur de ladite donnée,
l'exploitation comprenant les étapes suivantes :
- recevoir une requête d'une entité requérante, cette requête comprenant un identifiant de personne ou d'objet, un descripteur cible, un opérateur,
- exécuter, par l'entité répondante, la requête en appliquant l'opérateur sur la valeur courante correspondant au descripteur cible et produire une réponse,
- renvoyer la réponse à l'entité requérante. la **base de données** comprenant **de plus au moins un compteur de requêtes associé à une ou des données, et** la méthode comprenant **les étapes de :**
- **comparer la valeur du compteur avec une valeur maximale, l'exécution de la requête et le** renvoi **de la réponse** n' **étant exécutées que si la valeur est inférieure à la valeur maximale.**

3. Méthode selon la revendication 1 ou 2, **caractérisée en ce qu'**elle comprend une étape de certification, comprenant l'adjonction d'un certificat issu par une autorité à une donnée de la base de données, et **en ce que** ledit certificat est utilisé dans la préparation de la réponse envoyée à l'entité requérante.

4. Méthode selon la revendication 1 ou 2, **caractérisé en ce que** l'entité requérante dispose d'un certificat, ledit certificat étant utilisé pour signer la requête envoyée à l'entité répondante, ledit certificat étant vérifié avant de pouvoir exécuter la requête.

5. Méthode selon la revendication 1 ou 2, **caractérisé en ce que** le descripteur est de type index, une valeur d'index correspondant à un type de descripteur.

6. Méthode selon la revendication 1 ou 2, **caractérisé en ce que** le descripteur est de type champ libre, le contenu du champ libre étant initialisé lors de l'introduction de la valeur courante dans la base de données, l'entité répondante, lors de la réception du descripteur cible de la requête effectue une recherche par comparaison entre le descripteur cible et le ou les contenus du ou des descripteurs de ladite base de données.

7. Méthode selon la revendication 1 ou 2, **caractérisée en ce qu'**elle comprend les étapes suivantes:
- une fois la requête reçue par l'entité répondante, transmettre un message à la personne identifiée par l'identifiant de personne, ce message contenant au moins le descripteur cible,
- afficher sur un dispositif de la personne le descripteur cible,
- réception d'une commande de la part de la personne, cette commande autorisant ou interdisant la requête,
- transmission de la commande à l'entité répondante,
- autorisation ou interdiction du traitement de la requête selon la valeur de la commande.

8. Méthode selon la revendication 7, **caractérisée en ce que** la requête comprend un identifiant de l'entité requérante, et **en ce que** cet identifiant est affiché sur le dispositif de la personne avec le descripteur cible.

9. Méthode selon la revendication 1 ou 2, **caractérisée en ce que** la requête comprend un identifiant d'entité requérante, et **en ce qu'**elle comprend les étapes suivantes:
- organiser les données d'une personne selon au moins deux catégories,
- déterminer à quelle catégorie appartient l'entité requérante,
- accepter une requête pour autant que la catégorie de l'entité requérante soit compatible avec la catégorie des données du descripteur cible.

10. Support amovible associé à au moins une personne physique ou morale ou d'un objet et comprenant une base de données sécurisée, comprenant des données quantitatives ou qualitatives, chaque donnée comprenant au moins un descripteur et une valeur et au moins un compteur de requêtes associée à une ou des données, ledit support amovible pouvant être dans un état d'initialisation ou d'exploitation, ledit support amovible étant configuré pour, dans l'état d'initialisation, être connecté à un dispositif de saisie d'informations, recevoir des données d'authentification en démontrant le droit à au moins une introduction dans ladite base de données, et introduire dans la base de données sécurisée, pour une personne morale ou physique ou un objet, une valeur courante correspondant au descripteur de ladite donnée; ledit support amovible étant configuré pour, dans l'état d'exploitation, être connecté à un dispositif de communication, à recevoir une requête d'une entité participante, cette requête comprenant au moins un descripteur cible et un opérateur, à comparer la valeur du compteur avec une valeur maximale, si la valeur est inférieure, à incrémenter le compteur à chaque requête exécutée par l'entité répondante, et à exécuter, par l'entité répondante, la requête en appliquant l'opérateur sur la valeur courante correspondant au descripteur cible et produire une réponse, et à renvoyer la réponse à l'entité requérante.

## Patentansprüche

1. Verfahren zum Zugriff auf personenbezogene Daten mindestens einer natürlichen oder juristischen Person oder eines Gegenstands, die in einer gesicherten Datenbank auf einem entfernbaren Träger gespeichert sind, wobei diese Daten quantitative oder qualitative Daten umfassen und jedes Datum mindestens einen Deskriptor und einen Wert umfasst, wobei das Verfahren Initialisierungs- und Auswertungsphasen umfasst, wobei die Initialisierung folgende Schritte umfasst:
- den entfernbaren Träger mit einer Informationserfassungsvorrichtung verbinden,
- sich bei der Datenbank authentifizieren, indem man das Recht auf mindestens eine Eingabe nachweist,
- in die gesicherte Datenbank für eine natürliche oder juristische Person oder ein Objekt einen laufenden Wert entsprechend dem Deskriptor des besagten Datums einführen;
wobei die Auswertung folgende Schritte umfasst:
- den entfernbaren Träger mit einer Kommunikationsvorrichtung verbinden,
- eine Anfrage von einer anfragenden Einheit empfangen, wobei die Anfrage mindestens einen Zieldeskriptor und einen Operator umfasst,
- die Anfrage bearbeiten, durch die antwortende Einheit, indem man den Operator auf den laufenden Wert anwendet, der dem Zieldeskriptor entspricht, und eine Antwort herstellen,
- die Antwort an die anfragende Einheit zurücksenden,
wobei die Datenbank außerdem mindestens ein Anfragenzähler umfasst. der mit einem oder mehreren Daten verknüpft ist, wobei das Verfahren folgende Phasen umfasst:
- den Wert des Zählers mit einem maximalen Wert vergleichen, wobei die Erledigung der Anfrage und das Abschicken der Antwort erst dann erfolgen, wenn der Wert niedriger als der maximale Wert ist.

2. Verfahren zum begrenzten Zugriff auf Daten einer Vielzahl von natürlichen oder juristischen Personen oder Objekten, die in einer gesicherte Datenbank einer antwortenden Einheit gespeichert sind, wobei diese Daten quantitative oder qualitative Daten umfassen und jedes Datum mindestens einen Deskriptor und einen Wert umfasst, wobei das Verfahren Initialisierungs- und Auswertungsphasen umfasst, wobei die Initialisierung folgende Schritte umfasst:
- sich bei der Datenbank authentifizieren, indem man das Recht auf mindestens eine Eingabe nachweist,
- mindestens einen Menschen oder ein Objekt identifizieren,
- in die gesicherte Datenbank für diese Person oder das Objekt einen laufenden Wert einführen, der dem Deskriptor des besagten Datums entspricht,
wobei die Auswertung folgende Schritte umfasst:
- eine Anfrage von einer anfragenden Einheit empfangen, wobei diese Anfrage die Kennung einer Person oder eines Objekts, einen Zieldeskriptor und einen Operator umfasst,
- die Anfrage bearbeiten, durch die antwortende Einheit, indem man den Operator auf den laufenden Wert anwendet, der dem Zieldeskriptor entspricht, und eine Antwort herstellen,
- die Antwort an die anfragende Einheit zurücksenden, wobei die Datenbank außerdem mindestens einen Anfragenzähler umfasst. der mit einem oder mehreren Daten verknüpft ist, wobei das Verfahren folgende Phasen umfasst:
den Wert des Zählers mit einem maximalen Wert vergleichen, wobei die Erledigung der Anfrage und das Abschicken der Antwort erst dann erfolgen, wenn der Wert niedriger als der maximale Wert ist.

3. Verfahren nach Anspruch 1 oder 2, **dadurch gekennzeichnet, dass** es eine Zertifizierungsphase umfasst, die die Hinzufügung einer Bescheinigung umfasst, die von einer Autorität an ein Datum der Datenbank ausgestellt wird, sowie dadurch, dass besagte Bescheinigung bei der Vorbereitung der Antwort benutzt wird, die an die anfragende Einheit geschickt wird.

4. Verfahren nach Anspruch 1 oder 2, **gekennzeichnet dadurch, dass** die anfragende Einheit über eine Bescheinigung verfügt, die dazu benutzt wird, die an die antwortende Einheit geschickte Anfrage zu unterschreiben, wobei die Bescheinigung überprüft wird, bevor die Anfrage erledigt werden kann.

5. Verfahren nach Anspruch 1 oder 2, **gekennzeichnet dadurch, dass** der Deskriptor ein Index ist, wobei ein Indexwert einer Art von Deskriptor entspricht.

6. Verfahren nach Anspruch 1 oder 2, **gekennzeichnet dadurch, dass** der Deskriptor ein freies Feld ist, wobei der Inhalt des freien Feldes bei der Eingabe des laufenden Wertes in die Datenbank initialisiert wird, wobei die antwortende Einheit beim Empfang des Zieldeskriptors der Anfrage eine Suche durch Vergleich zwischen dem Zieldeskriptor und dem oder den Inhalten des oder der Deskriptoren der Datenbank durchführt.

7. Verfahren nach Anspruch 1 oder 2, **dadurch gekennzeichnet, dass** es die folgenden Schritte umfasst:
- wenn die Anfrage von der antwortenden Einheit empfangen wurde, eine Nachricht an die Person senden, die durch die Personenkennung identifiziert wurde, wobei diese Nachricht mindestens den Zieldeskriptor enthält,
- auf einer Vorrichtung der Person den Zieldeskriptor anzeigen,
- Empfang eines Befehls von Seiten der Person, der die Anfrage zulässt oder verbietet,
- Senden des Befehls an die antwortende Einheit,
- Genehmigung oder Verbot der Behandlung der Anfrage je nach dem Wert des Befehls.

8. Verfahren nach Anspruch 7, **gekennzeichnet dadurch, dass** die Anfrage eine Kennung der anfragenden Einheit umfasst, sowie dadurch, dass diese Kennung auf der Vorrichtung der Person mit dem Zieldeskriptor angezeigt wird.

9. Verfahren nach Anspruch 1 oder 2, **gekennzeichnet dadurch, dass** die Anfrage eine Kennung der anfragenden Einheit umfasst, sowie dadurch, dass es die folgenden Schritte umfasst:
- die Daten einer Person nach mindestens zwei Kategorien organisieren,
- bestimmen, zu welcher Kategorie die anfragende Einheit gehört,
- eine Anfrage akzeptieren, sofern die Kategorie der anfragenden Einheit kompatibel mit der Kategorie der Daten des Zieldeskriptors ist.

10. Entfernbarer Träger, der mit mindestens einer natürlichen oder juristischen Person oder einem Gegenstand assoziiert ist, mit einer gesicherten Datenbank, die quantitative oder qualitative Daten umfasst, wobei jedes Datum mindestens einen Deskriptor und einen Wert umfasst sowie mindestens einen Anfragenzähler, der mit einem oder mehreren Daten verknüpft ist, wobei der entfernbare Träger konfiguriert ist, um im Initialisierungszustand mit einer Informationserfassungsvorrichtung verbunden zu sein, Authentifizierungsdaten zu empfangen, die das Recht auf mindestens eine Eingabe in die Datenbank nachweisen,
und für eine natürliche oder juristische Person oder ein Objekt einen laufenden Wert in die gesicherte Datenbank einzugeben, der dem Deskriptor dieses Datums entspricht; wobei der entfernbare Träger konfiguriert ist, um im Auswertungszustand mit einer Kommunikationsvorrichtung verbunden zu sein, um eine Anfrage von einer teilnehmenden Einrichtung zu empfangen, wobei diese Anfrage mindestens einen Zieldeskriptor und einen Operator umfasst, die Anfrage zu bearbeiten, indem der Operator auf den laufenden Wert angewandt wird, der dem Zieldeskriptor entspricht, und eine Antwort herzustellen und die Antwort an die anfragende Einheit zurückzusenden.

## Claims

1. Access method to the personal data of at least one person or company or object, stored in a secure database on a removable support, these data comprising quantitative or qualitative data, each datum comprising at least one descriptor and one value, this method comprising steps of initialization and of use, the initialization comprising the following steps:
- connecting the removable support to a device for acquiring information,
- authenticating at the database by demonstrating the right for at least one introduction,
- introducing into the secure database, for a person or a company or an object, a current value corresponding to the descriptor of said datum;
the use comprising the following steps:
- connecting the removable support to a communication device,
- receiving a request from an requesting party, this request comprising at least one target descriptor and one operator,
- carrying out, by the respondent, the request by applying the operator on the current value corresponding to the target descriptor and producing a response,
- returning the response to the requesting party,
the database comprising a request counter associated with one or a plurality of values, and the method comprising the steps of :
- comparing the value of the counter with a maximum value, the execution of the request and the returning of the response being executed only if the value is below the maximum value.

2. Access method limited to the data of a plurality of persons or companies or objects, stored in a secure database of a respondent, these data comprising quantitative or qualitative data, each datum comprising at least one descriptor and one value, this method comprising steps of initialization and of use, the initialization comprising the following steps:
- authenticating at the database by demonstrating the right to at least one introduction,
- identifying at least one person or an object,
- introducing into the secure database, for said person or object, a current value corresponding to the descriptor of said datum,
the use comprising the following steps:
- receiving a request from an requesting party, this request comprising a person or object identifier, a target descriptor, an operator,
- carrying out, by the respondent, the request by applying the operator on the current value corresponding to the target descriptor and producing a response,
- returning the response to the requesting party, further comprising at least one request counter associated with one or a plurality of data, and the method comprising the steps of :
- comparing the value of the counter with a maximum value, the execution of the request and the returning of the response being executed only if the value is below the maximum value.

3. Method according to claim 1 or 2, **characterized by** including a certification step, comprising the addition of a certificate emitted by an authority to a datum of the database, and **characterized in that** said certificate is used in the preparation of the response sent to the requesting party.

4. Method according to claim 1 or 2, **characterized in that** the requesting party has a certificate, said certificate being used for signing the request sent to the respondent, said certificate being verified before he can carry out the request.

5. Method according to claim 1 or 2, **characterized in that** the descriptor is of the index type, an index value corresponding to a type of descriptor.

6. Method according to claim 1 or 2, **characterized in that** the descriptor is of the type free field, the contents of the free field being initialized during the introduction of the current value into the database, the respondent, during the reception of the target descriptor of the request, carries out a search by comparing the target descriptor with the contents of the descriptor(s) of said database.

7. Method according to claim 1 or 2, **characterized in that** it includes the following steps:
- once the request has been received by the respondent, transmitting a message to the person identified by the person identifier, this message containing at least the target descriptor,
- displaying, on a device of the person, the target descriptor,
- receiving a command on behalf of the person, this command authorizing or forbidding the request,
- transmitting the command to the respondent,
- authorizing or forgiving the treatment of the request according to the value of the control.

8. Method according to claim 7, **characterized in that** the request includes an identifier of the requesting party, and **in that** this identifier is displayed on the device of the person with the target descriptor.

9. Method according to claim 1 or 2, **characterized in that** the request includes a requesting party identifier, and **in that** it includes the following steps:
- organizing the data of a person according to at least two categories,
- determining to which category the requesting party belongs,
- accepting a request if the category of the requesting party is compatible with the category of the data of the target descriptor.

10. Removable support associated to at least one person or company or object and comprising a secure database, comprising quantitative or qualitative data, each datum comprising at least one descriptor and one value, said removable support being able to be in an initialization state or use state, said removable support being configured for, in the initialization state, to be connected to a device for acquiring information, receiving authentication data by demonstrating the right to at least one introduction into said database, and introducing into the secure database, for a person or a company or an object, a current value corresponding to the descriptor of said datum; said removable support being configured for, in the state of use, to be connected to a communication device, receiving a request from a requesting entity, this request comprising at least one target descriptor and one operator, carrying out the request by applying the operator on the current value corresponding to the target descriptor and producing a response, and returning the response to the requesting entity.
